# EUROPEAN PATENT APPLICATION

(11) **EP 1 087 537 A2**
(43) Date of publication of application: **28.03.2001**
(21) Application number: 00119433.1
(22) Date of filing: 14.09.2000
(51) Int. Cl.: H04B 1/10

(54) **Switching between band-pass filters of different frequency characteristics based on information as to usage of adjacent channels**

(30) Priority: 22.09.1999 JP 26793499
(71) Applicant: NEC CORPORATION, Tokyo (JP)
(72) Inventor: Mochizuki, Takashi, Minato-ku, Tokyo (JP)
(74) Representative: VOSSIUS & PARTNER

(57) **Abstract**

A transmission device switches between band-pass filters having different frequency characteristics based on adjacent channel usage information. The band-pass filters which reduce leakage power of one of two channels adjacent to a frequency band being used are selected, one at a time, by a switch based on a situation as to how adjacent channels are used. Leakage power into an adjacent channel that is being used can efficiently be reduced, or the overall cost of the band-pass filters can be lowered.

## Description

The present invention relates to a transmission device for use in a mobile communication system, and more particularly to a communication system, i.e., a cellular mobile communication system, based on the CDMA (Code Division Multiple Access) technique.

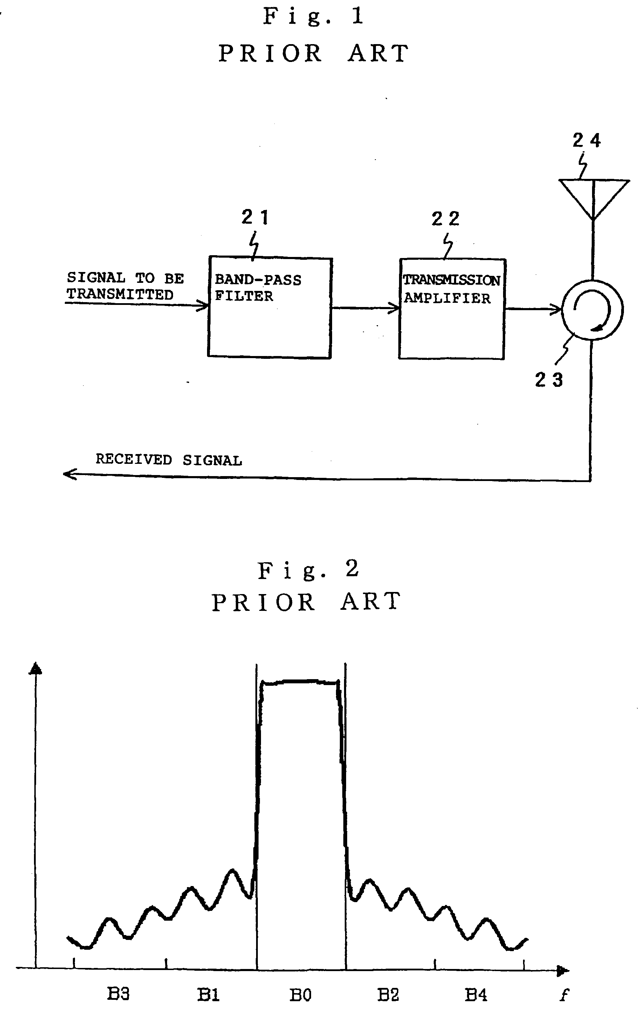

As shown in Fig. 1 of the accompanying drawings, the transmission output unit of a mobile communication apparatus in a mobile communication system comprises a band-pass filter 21, a transmission amplifier 22, a circulator 23, and an antenna 24.

In the transmission output unit, a signal to be transmitted is limited in band by the band-pass filter 21, then amplified by the transmission amplifier 22, and thereafter transmitted via the circulator 23 from the antenna 24. Generally, the mobile communication system is designed such that the transmission power is sufficiently low outside the transmission band.

In referring Fig.2, since the signal to be transmitted is limited in band by the band-pass filter 21 and then amplified by the transmission amplifier 22, the signal to be transmitted needs to be sufficiently attenuated in bands B1, B2, B3, and B4 outside a band B0 that is used for signal transmission. In order to achieve sufficient level attenuation outside the used band, it is necessary to make characteristic curves of the band-pass filter 21 steep and increase the linearity of the transmission amplifier 22. However, the band-pass filter with steep characteristic curves and the transmission amplifier with high linearity are more expensive than ordinary filters and transmission amplifiers.

It is therefore an object of the present invention to provide a transmission device, at low cost, which will solve the problems of the conventional transmission device, and is capable of reducing leakage power outside a band that is used for signal transmission.

A transmission device according to the present invention has a first band-pass filter, a second band-pass filter, selecting means, and transmitting means. The first band-pass filter has such frequency characteristics as to achieve an attenuation level in a channel adjacent to a frequency channel being used to a predetermined value. The second band-pass filter has such frequency characteristics as to make an attenuation level in one of the channels adjacent to the frequency channel being used, greater than said predetermined value. The selecting means selects one of the signals processed by said first band-pass filter and said second band-pass filter based on adjacent channel usage information indicative of a situation as to how the adjacent channels are used. The transmitting means amplifies and transmits the signal selected by said selecting means.

With the above arrangement, even if band-pass filters having the same conditions for lowering leakage power as is conventional are used, the leakage power into an adjacent frequency band that is actually used can be reduced. Furthermore, by making less strict conditions for lowering the leakage power into a frequency band that is not used, conditions for designing band-pass filters can be made less strict while their effect on peripheral systems remains the same, so that the cost of the band-pass filters can be reduced.

The above and other objects, features, and advantages of the present invention will become apparent from the following description with reference to the accompanying drawings which illustrate examples of the present invention.
Fig. 1 is a block diagram of a conventional transmission device;
Fig. 2 is a diagram showing a power density distribution of a signal to be transmitted by the conventional transmission device;
Fig. 3 is a block diagram of a transmission device according to a first embodiment of the present invention;
Fig. 4 is a diagram showing the frequency characteristics of a band-pass filter in the transmission device shown in Fig. 3;
Fig. 5 is a diagram showing the frequency characteristics of another band-pass filter in the transmission device shown in Fig. 3;
Fig. 6 is a diagram showing the frequency characteristics of still another band-pass filter in the transmission device shown in Fig. 3;
Fig. 7 is a diagram illustrative of a mode of operation of the transmission device according to the first embodiment of the present invention;
Fig. 8 is a diagram illustrative of another mode of operation of the transmission device according to the first embodiment of the present invention;
Fig. 9 is a block diagram of a transmission device according to a second embodiment of the present invention; and
Fig. 10 is a block diagram of a transmission device according to a third embodiment of the present invention.

### First Embodiment:

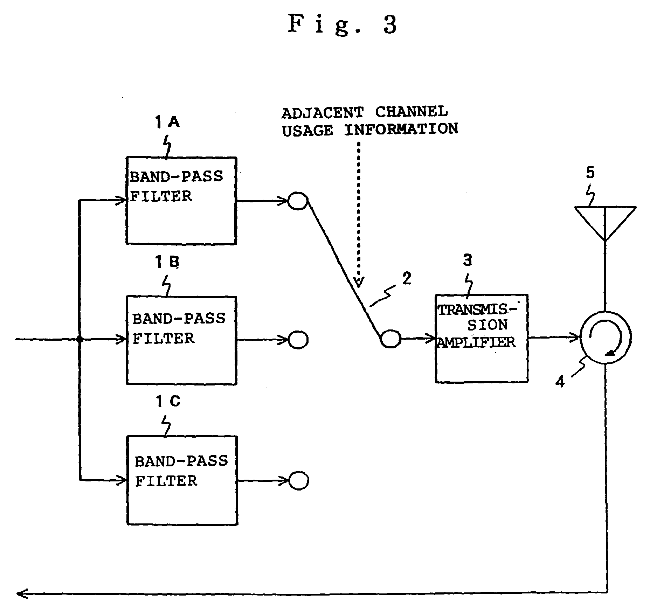

As shown in Fig. 3, a transmission device according to a first embodiment of the present invention, which is a transmission device for use in a communication system based on the CDMA (Code Division Multiple Access) technique, has band-pass filters 1A, 1B, and 1C, a switch 2, a transmission amplifier 3, a circulator 4, and an antenna 5. The band-pass filters 1A, 1B, and 1C are designed such that they have different frequency characteristics.

A signal to be transmitted is processed by the band-pass filters 1A, 1B, and 1C, and one of the output signals from the band-pass filters 1A, 1B, and 1C is selected by the switch 2 depending on the information of usage of adjacent channels, i.e., adjacent channel usage information, from an external circuit. The selected signal is amplified by the transmission amplifier 3, and then transmitted via the circulator 4 from the antenna 5.

The transmission amplifier 3, the circulator 4, and the antenna 5 serve to transmit and receive signals via radio links. Since the transmission amplifier 3, the circulator 4, and the antenna 5 are well known in the art and have no direct bearing on the present invention, their structural details and operation will not be described below.

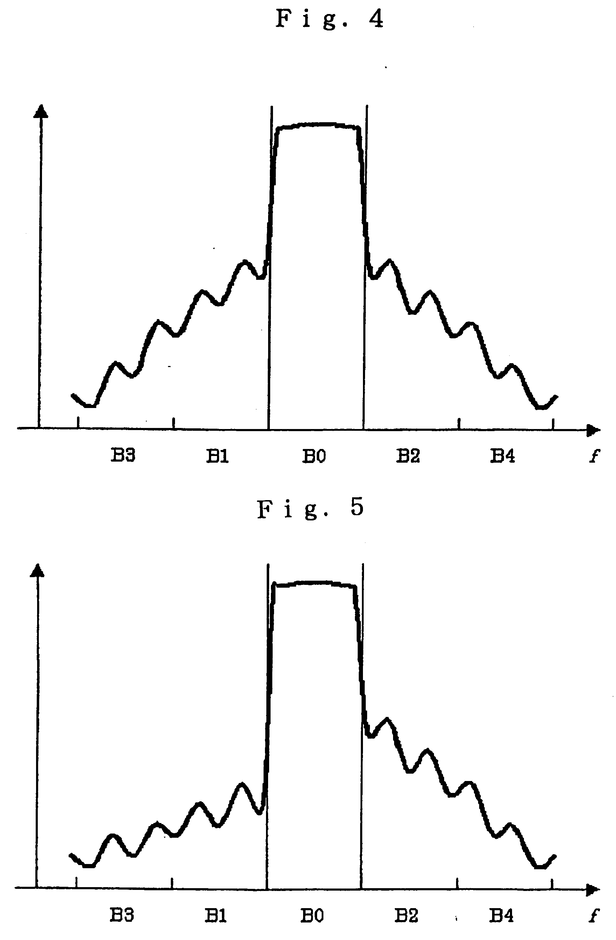

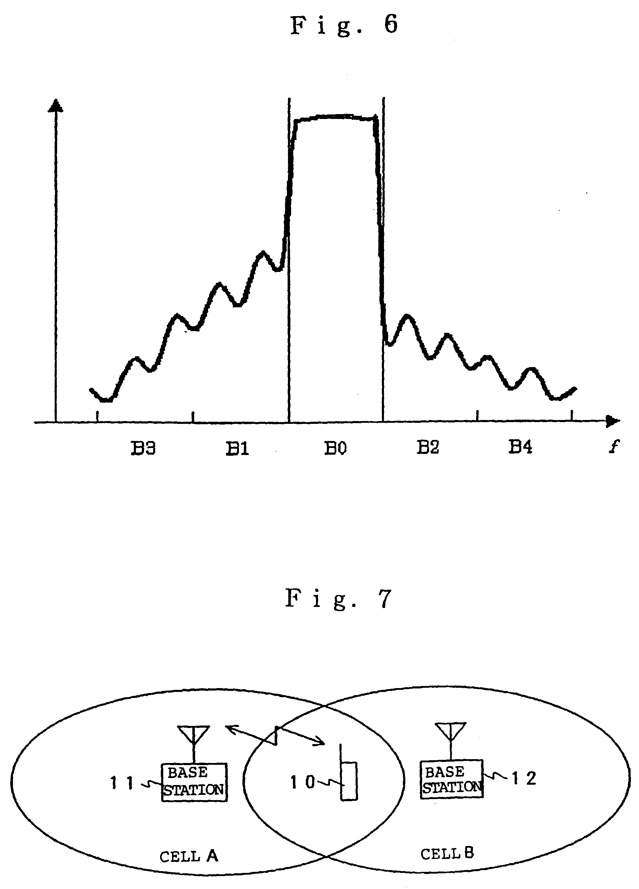

Fig. 4 shows the frequency characteristics of the band-pass filter 1A. Fig. 5 shows the frequency characteristics of the band-pass filter 1B. Fig. 6 shows the frequency characteristics of the band-pass filter 1C. Operation of the transmission device according to the first embodiment will be described below with reference to Figs. 3 through 6.

The band-pass filters 1A, 1B, and 1C are designed such that they have respective frequency characteristics as shown in Figs. 4 through 6. Specifically, the frequency characteristics of the band-pass filter 1A are such that attenuation levels of two adjacent channels are of a predetermined value. The frequency characteristics of the band-pass filter 1B are such that the attenuation level of a lower-frequency one of two adjacent channels is greater than the predetermined value. The frequency characteristics of the band-pass filter 1C are such that the attenuation level of a higher-frequency one of two adjacent channels is greater than the predetermined value.

When a band B1 adjacent to a used band B0 is used by an adjacent system, the switch 2 selects the band-pass filter 1B. When a band B2 adjacent to the used band B0 is used by an adjacent system, the switch 2 selects the band-pass filter 1C. When neither the band B1 or the band B2 is used by an adjacent system, the switch 2 selects the band-pass filter 1A.

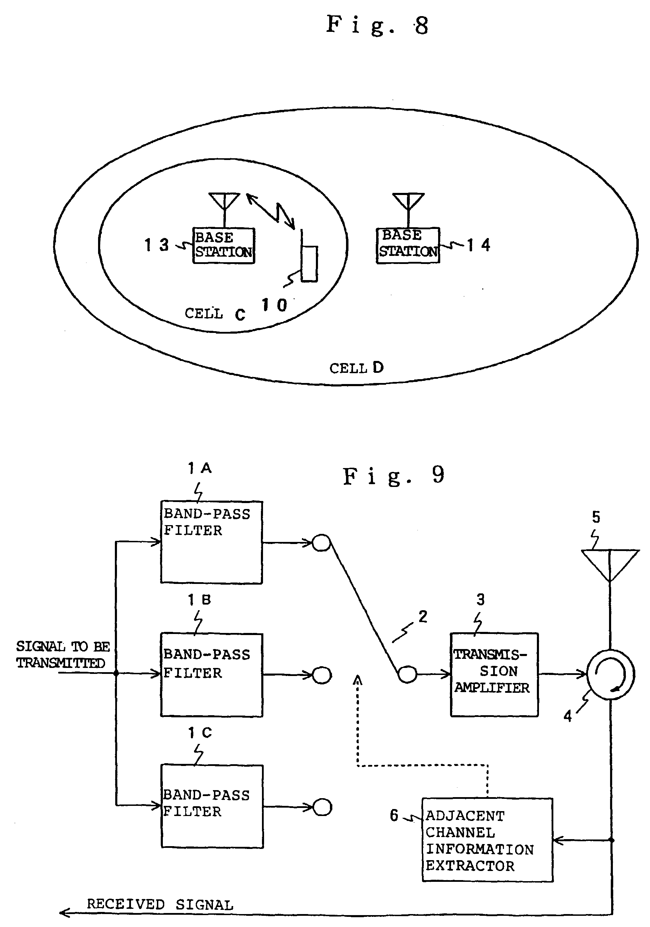

Fig. 7 is illustrative of a mode of operation of the transmission device according to the first embodiment of the present invention. Fig. 8 is illustrative of another mode of operation of the transmission device according to the first embodiment of the present invention. In Figs. 7 and 8, the mobile communication system comprises a mobile station 10 and a plurality of base stations 11 through 14.

Operation of the transmission device according to the first embodiment will be described below with reference to Figs. 7 and 8. As shown in Fig. 7, if different systems, i.e., a cell A and a cell B, are located adjacent to each other, even when the mobile station 10 disposed in the cell A is positioned near the base station 12 of the cell B, the effect of the mobile station 10 on the system which has the cell B can be reduced by constructing the transmission device of the mobile station 10 identically to the transmission device according to the first embodiment.

As shown in Fig. 8, if a cell C and a cell D belong to the same system with the cell C located within the larger cell D, then the effect of the mobile station 10 on the cell D can be reduced by constructing the transmission device of the mobile station 10 which is communicating in the cell C identically to the transmission device according to the first embodiment.

If the transmission device according to the first embodiment is applied to a base station (not shown) of a mobile communication system, then since the frequency bands used by adjacent systems are fixed and known, only a necessary one of the band-pass filters 1A, 1B, and 1C may be employed, and the switch 2 is not required.

If the transmission device according to the first embodiment is applied to a mobile station (not shown) of a mobile communication system, then a base station sends adjacent channel usage information to the mobile station, and the mobile station extracts the adjacent channel usage information from the received signal. Based on the adjacent channel usage information, the switch 2 selects either one of the output signals from the band-pass filters 1A, 1B, and 1C.

If a base station does not send adjacent channel usage information to the mobile station, then an adjacent channel monitor installed in the mobile station decides a situation as to how adjacent channels are used from the received signal, and the switch 2 selects either one of the output signals from the band-pass filters 1A, 1B, and 1C based on the decided situation as to how adjacent channels are used.

### Second Embodiment:

As shown in Fig. 9, a transmission device according to a second embodiment of the present invention is essentially the same as the transmission device according to the first embodiment shown in Fig. 3 except that the transmission device according to the second embodiment additionally has an adjacent channel information extractor 6. Those parts of the transmission device according to the second embodiment which are identical to those of the transmission device according to the first embodiment are denoted by identical reference characters, and operate in the same manner as those of the transmission device according to the first embodiment.

The adjacent channel information extractor 6 extracts adjacent channel usage information from a signal received from a base station (not shown) by the antenna 5 and supplied via the circulator 4, and sends the extracted adjacent channel usage information to the switch 2. Based on the extracted adjacent channel usage information, the switch 2 selects either one of output signals from the band-pass filters 1A, 1B, and 1C.

When the base station sends adjacent channel usage information, the adjacent channel information extractor 6 extracts the adjacent channel usage information. The switch 2 can select either one of output signals from the band-pass filters 1A, 1B, and 1C based on the extracted adjacent channel usage information from the adjacent channel information extractor 6, and does not need to be supplied with adjacent channel usage information from an external circuit. The adjacent channel information extractor 6 simply extracts adjacent channel usage information from the received signal, and hence structural details and operation of the adjacent channel information extractor 6 will not be described below.

### Third Embodiment:

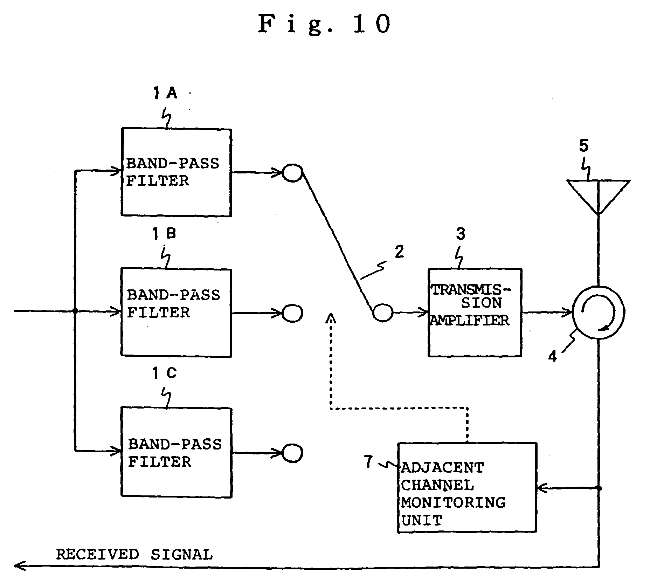

As shown in Fig. 10, a transmission device according to a third embodiment of the present invention is essentially the same as the transmission device according to the first embodiment shown in Fig. 3 except that the transmission device according to the third embodiment additionally has an adjacent channel monitoring unit 7. Those parts of the transmission device according to the third embodiment which are identical to those of the transmission device according to the first embodiment are denoted by identical reference characters, and operate in the same manner as those of the transmission device according to the first embodiment.

The adjacent channel monitoring unit 7 decides a situation as to how adjacent channels are used from a signal received from a base station (not shown) by the antenna 5 and supplied via the circulator 4, and sends the decided situation as to how adjacent channels are used as adjacent channel usage information to the switch 2. Based on the decided situation as to how adjacent channels, the switch 2 selects either one of output signals from the band-pass filters 1A, 1B, and 1C.

Even when the base station does not send adjacent channel usage information, the adjacent channel monitoring unit 7 decides a situation as to how adjacent channels are used. Therefore, the switch 2 can select either one of output signals from the band-pass filters 1A, 1B, and 1C based on the decided situation as to how adjacent channels are used from the adjacent channel monitoring unit 7, and does not need to be supplied with adjacent channel usage information from an external circuit. The adjacent channel monitoring unit 7 decides a situation as to how adjacent channels are used from a received signal to determine which bands are used in adjacent channels from the received signal. Since such a deciding process is of a general nature in a communication system based on the CDMA technique, structural details and operation of the adjacent channel monitoring unit 7 will not be described below.

As described above, the band-pass filters 1A, 1B, and 1C are designed such that they have different frequency characteristics, and the switch 2 selects either one of output signals from the band-pass filters 1A, 1B, and 1C based on adjacent channel usage information or a situation as to how adjacent channels are used. In this manner, although conditions for lowering reference leakage power are the same, the leakage power into an adjacent frequency band that is actually used can be further reduced. By stopping the action of the band-pass filter not selected by switch 2, wasteful power is not consumed.

Furthermore, by making less strict conditions for lowering the leakage power into a frequency band that is not used, conditions for designing band-pass filters can be made less strict while their effect on peripheral systems remains the same, so that the cost of the band-pass filters can be reduced.

While preferred embodiments of the present invention have been described using specific terms, such description is for illustrative purposes only, and it is to be understood that changes and variations may be made without departing from the spirit or scope of the following claims.

## Claims

1. A transmission device comprising:
a first band-pass filter having such frequency characteristics as to achieve an attenuation level in a channel adjacent to a frequency channel being used to a predetermined value;
a second band-pass filter having such frequency characteristics as to make an attenuation level in one of the channels adjacent to the frequency channel being used, greater than said predetermined value;
selecting means for selecting one of signals processed by said first band-pass filter and said second band-pass filter based on adjacent channel usage information indicative of a situation as to how the adjacent channels are used; and
transmitting means for amplifying and transmitting the signal selected by said selecting means.

2. A transmission device according to claim 1, further comprising:
adjacent channel information extracting means for extracting information indicative of the situation as to how the adjacent channels are used from a received signal, and outputting the extracted information as said adjacent channel usage information.

3. A transmission device according to claim 1 or 2, further comprising:
adjacent channel monitoring means for deciding the situation as to how the adjacent channels are used from a received signal, and outputting the decided situation as said adjacent channel usage information.

4. A transmission device according to claim 1,2 or 3, wherein said second band-pass filter comprises:
a band-pass filter having such frequency characteristics as to make an attenuation level in a lower-frequency one of the channels adjacent to the frequency channel being used, greater than said predetermined value; and
a band-pass filter having such frequency characteristics as to make an attenuation level in a higher-frequency one of the channels adjacent to the frequency channel being used, greater than said predetermined value.
